# EUROPEAN PATENT SPECIFICATION

(11) **EP 1 479 600 B1**
(45) Date of publication and mention of the grant of the patent: **21.06.2006**
(21) Application number: 04011945.5
(22) Date of filing: 19.05.2004
(51) Int. Cl.: B62J 6/02, B62J 3/00, B60Q 1/068

(54) **Headlight structure for a motorcycle**
Scheinwerfer für ein Motorrad
Structure de phare pour une motocyclette

(30) Priority: 20.05.2003 CN 03136419
(43) Date of publication of application: 24.11.2004
(73) Proprietor: YAMAHA HATSUDOKI KABUSHIKI KAISHA, Iwata-shi Shizuoka-ken (JP)
(72) Inventor: Hsu, Han-Chuan, Chunli (TW); Peng, Chih-Ching, Chunli (TW); Wen, Po-Chi, Chunli (TW)
(74) Representative: Grünecker, Kinkeldey, Stockmair & Schwanhäusser Anwaltssozietät

(56) References cited:
- FR-A- 2 752 788
- GB-A- 877 214
- US-A- 4 121 278
- US-A- 6 039 466
- PATENT ABSTRACTS OF JAPAN vol. 2002, no. 11, 6 November 2002 (2002-11-06) & JP 2002 205594 A (HONDA MOTOR CO LTD), 23 July 2002 (2002-07-23)
- PATENT ABSTRACTS OF JAPAN vol. 2000, no. 21, 3 August 2001 (2001-08-03) & JP 2001 088758 A (KAWASAKI HEAVY IND LTD), 3 April 2001 (2001-04-03)

## Description

The invention relates to a headlight structure for a motorcycle.

According to the conventional technologies, the headlight of a motorcycle is mounted to its front cover, which means a hole of a certain size and a certain shape must be made on the front cover to mount the headlight. Therefore, the precision of the matching between the headlight and the hole becomes very important. In the event there is any space left between the two, not only the look of the whole structure will be affected, but also the headlight might shake or break because of the bad fastening.

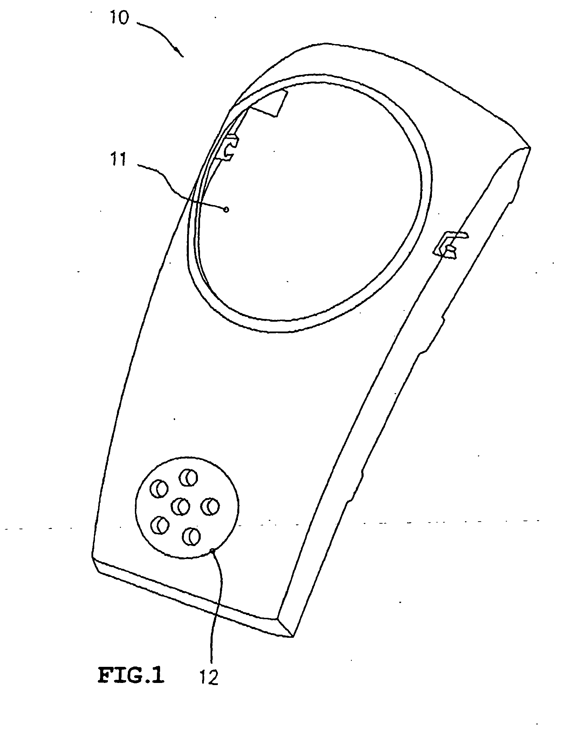

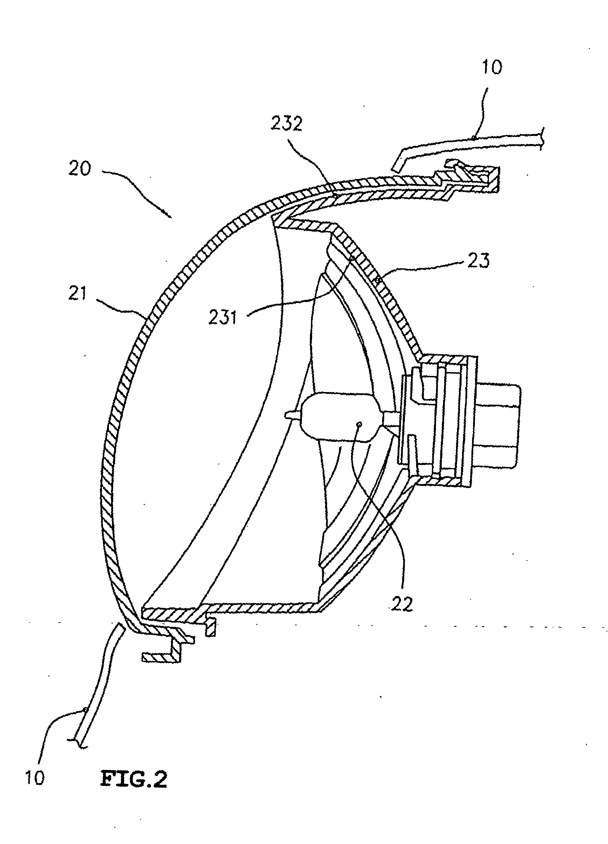

In the Japanese Unexamined Patent Publication No. 2002-205594, a headlight structure of the motorcycle is disclosed. Figure 1 illustrates the front view of the front cover of the headlight structure. Figure 2 illustrates the side sectional view when the headlight 20 is mounted to the front cover 10 in the centerline. There is a hole 11 on the upper side of the front cover 10 to connect and mount the headlight 20. An alarm 12 is mounted below the hole 11. The headlight 20 includes a light housing 21, a bulb 22 and a reflector 23. The tight housing 21 is of a curved surface and embedded into the hole 11 on the front cover 10. The bulb 22 is mounted horizontally to the center of the reflector 23 to provide a source for the illumination of the motorcycle. The reflector 23 includes a reflecting body 231 and its extension 232. The reflecting body 231 is a bowl-shaped structure that opens to the front to reflect the light given off by the bulb 22. The extension 232 extends backwards along the light housing 21 from the top of the reflecting body 231, its rear embedded into the top of the light housing 21.

As mentioned, the precision of the matching between the hole 11 on the front cover 10 and the light housing 21 is very important to avoid any space to be created between the two. Because, when the reflecting body 231 and its extension 232 form, the angle of the extension 232 will have to be changed when the angle of the reflecting body 231 is to be adjusted. For example, to increase the angle of elevation of the reflecting body 231, the extension 232 will have to move backwards, in which case the light housing 21 or other parts of the body of the cycle might be clashed. Therefore, under such designs, bigger space must be reserved to accommodate the displacement of its extension 232. In addition, the front cover 10 must open another hole to mount the alarm 12. It requires rather difficult production processes, which will increase the cost.

Therefore, it is an object of the invention to provide a headlight structure for a motorcycle that is easy to assemble and avoids interferences between components thereof and with components of the motorcycle.

This object is solved in an inventive manner by providing a headlight structure for a motorcycle, the headlight structure comprising a light holder, a main reflector mounted to the light holder, a light housing connected to the light holder and/or a back cover, and a front cover located next to the light housing, wherein a sound opening for the provision of an alarm sound is provided between a front part of said light housing and said front cover.

*Preferably, there is provided* an upper ornament, wherein the upper ornament is provided inside the light housing as a part separate from the main reflector, and wherein the upper ornament is located above the main reflector and extends backwards along the shape of the light housing.

*Further* preferably, the main reflector is provided with a bowl-shaped first reflection surface including a first opening designed to mount a main light bulb. Therein, said main reflector is further provided with a second reflection surface that is L-shaped and has a second opening to mount a position bulb.

*Still* further preferably, a back part of the main reflector is connected to a rotating structure so that the main reflector is rotatable about a rotation axis thereof and an angle of depression or elevation is adjustable. Therein, said rotating structure includes at least two round-head screws positioned on the same height and/or in that the back part of the main reflector is connected to a variable structure, the mounting height of which is different from that of the rotating structure, wherein said variable structure preferably includes at least one screw.

Yet further preferably, a rear part of the light housing is connected to the light holder and/or the back cover. Therein, both sides of the light holder include at least one, preferably two, fastening ears to fasten a front cover, wherein the back cover is mounted to a lower part of the rear part of the light housing.

Moreover, a motorcycle is provided comprising a body, a seat mounted to an upper part of the rear of the body, a gear case mounted to a lower part of the rear of the body, a rear wheel, a front wheel, and a headlight structure mounted to the part of the body that is above the front wheel, wherein said headlight structure is configured as described above, in particular according to at least one of the claims 1 to 9.

Further preferred embodiments are subject to the respective subclaims.

In the following, the invention will be described in greater detail by means of embodiments thereof with reference to the accompanying drawings, wherein:
- Figs. 1 and 2: are illustrations of the headlight structure of a conventional motorcycle;
- Fig. 3: is a block diagram of the headlight structure of the motorcycle according to the present *embodiment;*
- Fig. 4: is a cross sectional view of Figure 3 along the line 1-1;
- Fig. 5: is a cross sectional view of Figure 4 along the line 2-2;
- Fig. 6: is a cross sectional view of Figure 4 along the line 3-3;
- Fig. 7: is a lateral view of Figure 4 along the line 4-4;
- Fig. 8: is an illustration of the headlight structure of a motorcycle according to the present *embodiment,* and
- Fig. 9: is a cross sectional view of Figure 3 along the line A-A, and the illustration of the joint section structure between the light housing and the back cover.

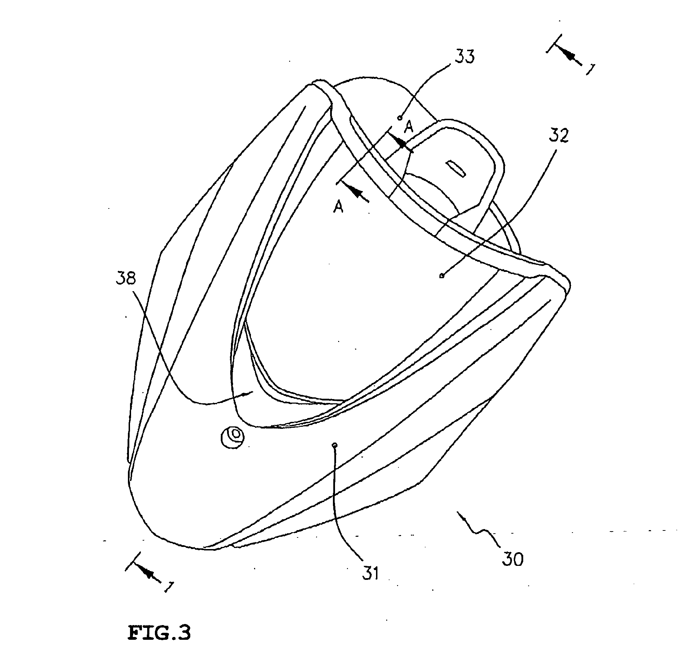

Figure 3 displays the block diagram of a headlight structure 30 of a motorcycle, preferably being of the scooter type, which includes a front cover 31, a light housing 32, and a light holder 33. The light housing 32 is embedded into the front cover 31, and an opening such as a gap 38 formed between its front and the front cover 31, whereas its rear part is connected to the light holder 33. Such a structure eliminates the requirement to make on hole on the front cover 31 of the headlight structure 30 of the motorcycle. Accordingly, as the rear part of the light housing 32 is connected directly to the light holder 33, the size of the light housing 32 can be increased flexibly to optimize the overall look.

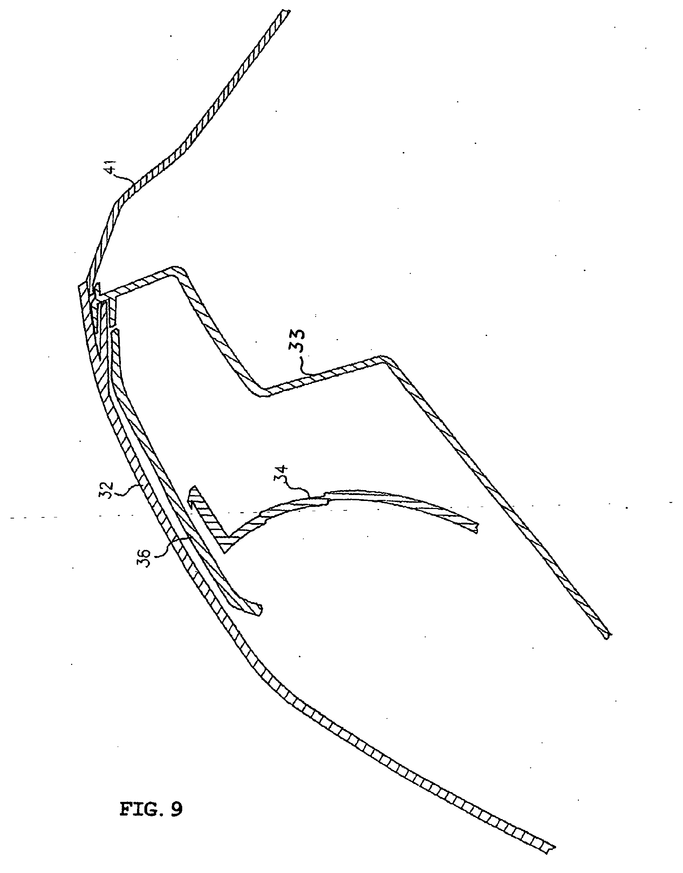

Figure 9 is the cross sectional view of Figure 3 along the line A-A, and the illustration of the joint section structure between the light housing 32 and the back cover 41. The light housing 32 is fastened onto the back cover 41. As illustrated, it can be an embedment of the back cover 41 into the lower part of the rear of the light housing 32 for a better appearance.

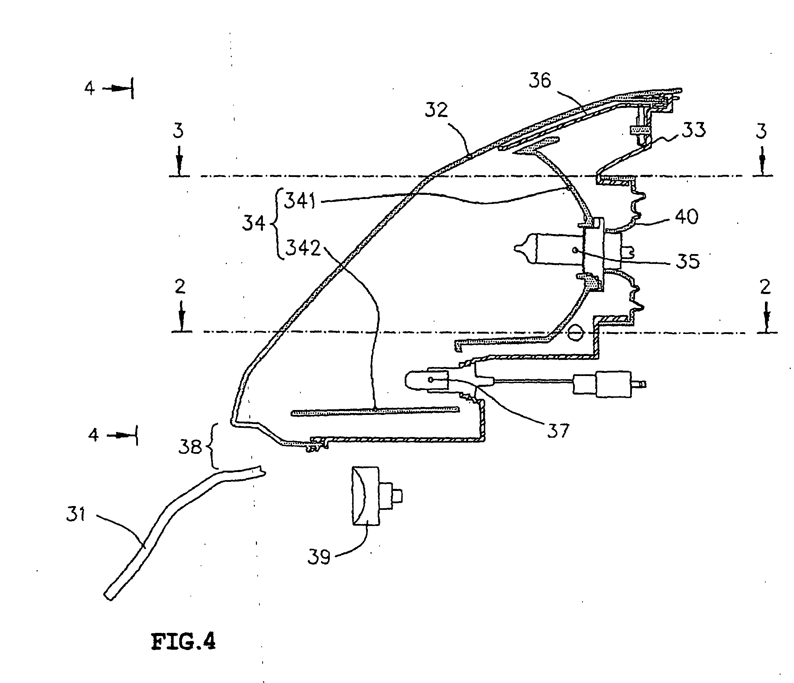

Figure 4 is the cross sectional view of Figure 3 along the line 1-1. In the profile structure of the headlight structure 30 of the motorcycle, the light housing 32 extends to the upper right direction and is connected to the light holder 33. A main reflector 34 is fastened to the light holder 33 which includes a bowl-shaped curve-surfaced first reflection surface 341 and an L-shaped second reflection surface 342. A main light bulb 35 is mounted to the center of the first reflection surface 341 so that light rays generated by the main light bulb 35 are converged to enhance the lightening effects. A position bulb 37 is mounted to the second reflection surface 342 as a supplementary light source. An upper ornament 36 extends backwards along the shape of the light housing 32 for decoration.

A gap 38 is formed as a sound opening between the front cover 31 and the head of the light housing 32 to provide the alarming sound produced by the alarm 39. A protection lid 40 is inserted in the center of the light holder 33 to connect the main light bulb 35 and the light holder 33.

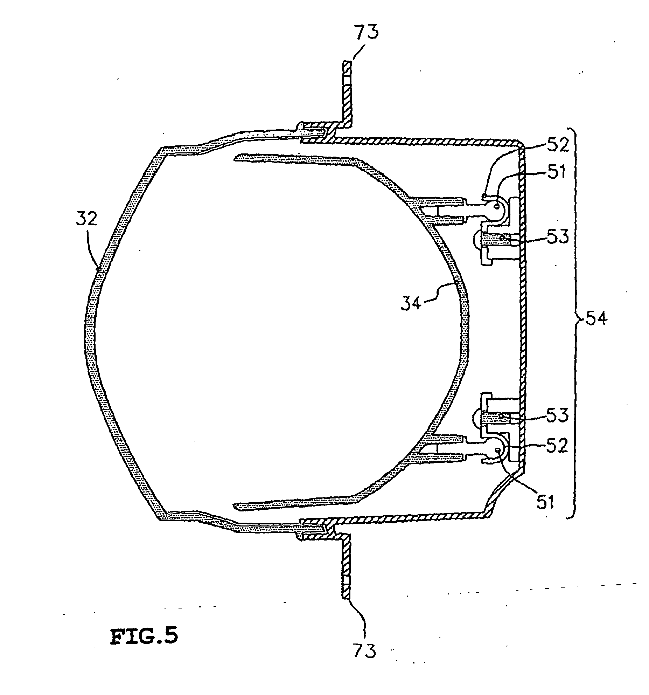

Figure 5 is the cross sectional view of Figure 4 along the line 2-2. Both sides of the light housing 32 are inserted into the light holder 33. There is a rotating structure 54 on the back of the main reflector 34. The structure 54 includes a round-head screw on the left and another one on the right 51, a fastening hook 52 and a screw 53. Heads of the round-head screws 51 are covered under the fastening hook 52 and can be turned around under it. On the other hand, the threaded ends of the screws are fastened to the back of the main reflector 34. The fastening hooks 52 are mounted to the light holder 33 by the screw 53. Thus, as the two round-head screws 51 are on the same height, the angles of depression or elevation of the main reflector 34 can be adjusted, the line between the two round-head screws serving as the rotation axis.

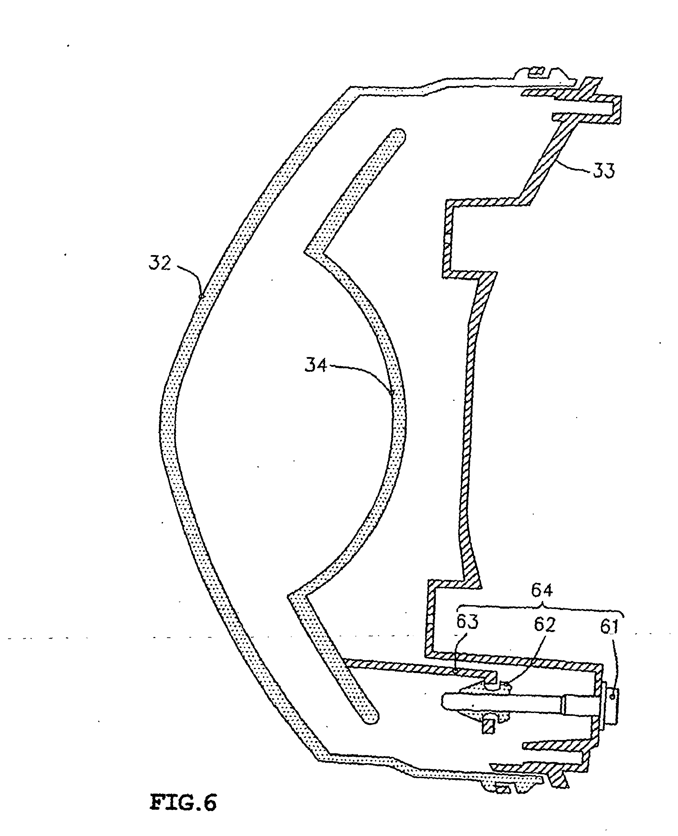

Figure 6 is the cross sectional view of Figure 4 along the line 3-3. Both sides of the light housing 32 are inserted directly in the light holder 33. On the back of the main reflector 34, there is a variable structure, also called an elastic structure 64 which includes an L-shaped connecting rod 63, a screw 61 and a nut 62. The screw 61 is mounted to the light housing 33, and the said nut 62 is fastened to its threaded end. One end of the L-shaped connecting rod 63 is connected to the back of the main reflector 34. There is a hole on the other end, the edge of the hole inserted into the slit of the nut 62. As the screw 61 and the round-head screws 51 are on different heights, the forward or backward movements of the screw 61 will cause the main reflector 34 to rotate around the rotation axis formed on the line between the two round-head screws 51, so that the angles of depression or elevation of the main reflector 34 will be adjusted.

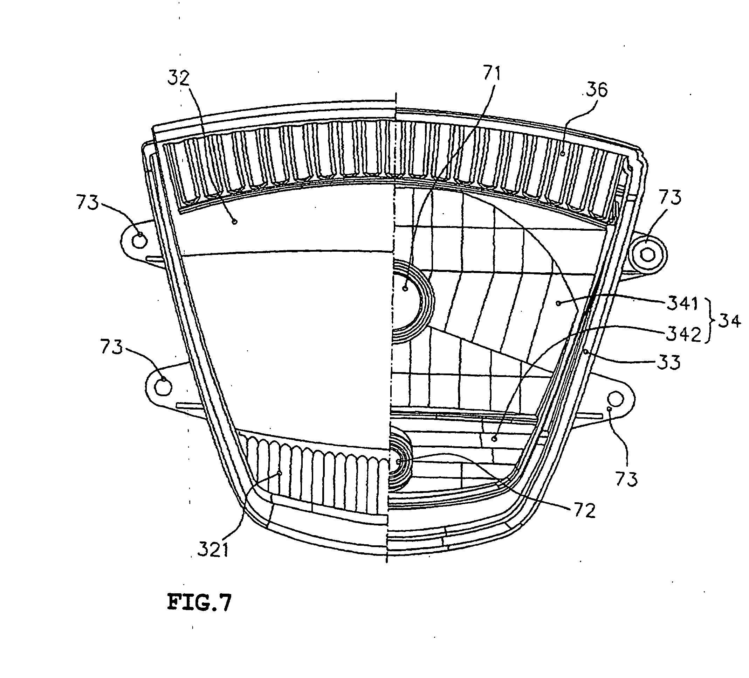

Figure 7 is the lateral view of Figure 4 along the line 4-4, or the front view of the light housing 32. The *embodiment,* the headlight structure 30 of the motorcycle is, in general, a symmetrical structure. To make it easy to understand, the left half of Figure 7 displays the state when the light housing 32 is mounted, while its right half displays the state when the light housing 32 is not mounted so as to illustrate its inner structure. The light housing 32 may be made of a transparent or opaque material. Its lower end may be made into a decorative stripe texture 321. The first reflection surface 341 of the main reflector 34 is a bowl-shaped curve-surfaced structure and has a first opening 71 to accommodate the device main light bulb 35 in Figure 4. The second reflection surface 342 of the main reflector 34 has a second opening 72 to mount the position bulb 37 in Figure 4. The surface of the upper ornament 36 is made into stripe texture for decoration. As illustrated in Figure 3, the four fastening ears 73 are mounted respectively onto the sides of the light housing 33 to fasten the front cover 31.

The round-head screws 51 and the screw 61 can also be replaced by a rotating structure and elastic structure of other types as long as it uses the elastic structure to drive the main reflector 34 to rotate according to the rotating structure. Such a system shall be deemed as within the range of this invention.

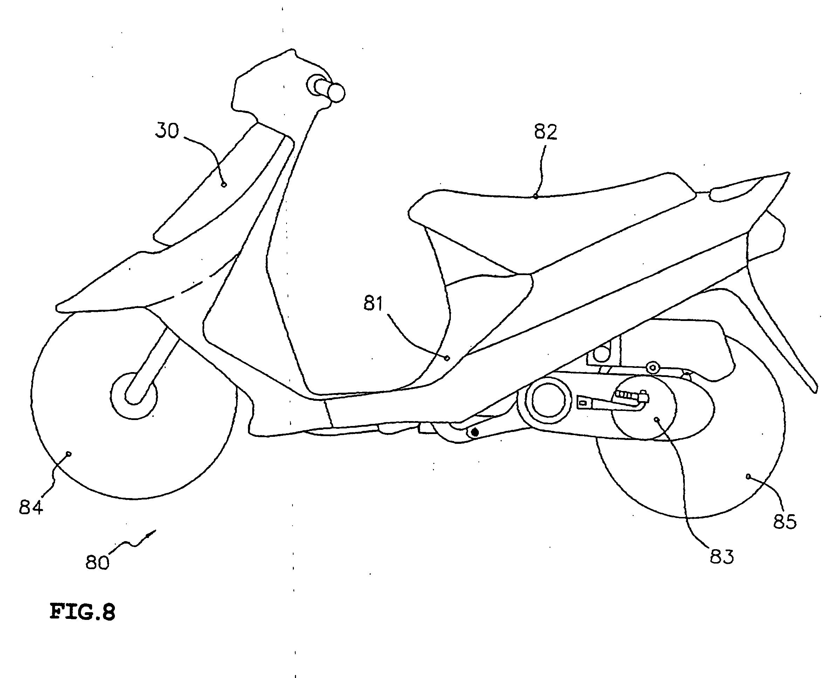

Figure 8 is the illustration of a motorcycle 80 on which the headlight structure 30 of a motorcycle according to the present *embodiment* is mounted. The headlight structure 30 of a motorcycle is mounted to the head of the body of a motorcycle 81, that is, above the front wheel 84. The seat 82 is mounted to the upper part of the rear part of the body 81, while a gear case 83 and a rear wheel 85 are mounted to the lower part of the rear of the body 81.

The technical contents and technical features of the present *embodiment* are described as the above. However, ordinary skilled in the art may still, based on the illustrations and descriptions of this *embodiment,* make further altematives or improvements.

Above, a headlight structure of a motorcycle and a motorcycle comprising such a headlight structure, preferably, including a light holder, a light housing, a front cover, a back cover and a main reflector, is described. The light housing can be combined to the back cover directly. Preferably, it also includes an upper ornament that forms a different part from the reflector. The upper ornament is above the main reflector and extends backwards along the shape of the light housing. A gap is thus resulted between the front cover and the light housing so as to provide the alarming sounds produced by the alarm of the motorcycle. The main reflector structure is fixed to the light holder. It includes a first reflection surface that is of the shape of a bowl. In the center of the first reflection surface, there is a first opening where a main light bulb will be mounted. As the main reflector and the upper ornament are two parts, the main reflector will be adjusted to an angle of depression or elevation easily without affecting the upper ornament and without creating any interference between the components. In addition, the cost of production is lowered because of the design of the opening between the light housing and the front cover without the needs of holes for the alarming sound on the front cover.

By providing such a headlight structure for a motorcycle, it is achieved that the headlight structure is easily connected and allows the mounting of an alarm without the need to open a hole. Thus, the production process will be simplified, and the cost of production will be lowered.

Moreover, such a headlight structure of the motorcycle that can adjust the angles of depression and elevation of the reflector is provided and also can avoid interferences between components of the motorcycle.

Further, it is possible to provide a large-scale headlight structure of the motorcycle so as to optimize the illumination effects and the overall look.

The headlight structure of the motorcycle according to the present *embodiment* preferably includes a light holder, a light housing, a front cover, a back cover and a main reflector. The light housing may be connected directly to the back cover. In addition, the headlight structure of the motorcycle may include an upper ornament which forms a different part from the main reflector. It is above the main reflector and extends backwards along the shape of the light housing.

The main reflector shall be mounted to the light holder and includes a bowl-shaped curve-surfaced first reflection surface. In the center of the first reflection surface there shall be a first opening to mount a main light bulb.

In addition, the lower part of the main reflector may include an L-shaped second reflection surface which includes a second opening to mount a position bulb.

A gap is formed naturally between the front cover and the light housing to provide the alarming sound produced by the alarm of the motorcycle.

The back of the main reflector shall connect at least two round-head screws that are on the same height and at least one screw that is mounted on a different height so that the stretching or withdrawing of the screw will drive the main reflector to rotate around the rotation axis on the line between the two round-head screws so as to adjust the angles of depression and elevation.

As the main reflector and the upper ornament are two different parts, it is easy to adjust the angles of depression and elevation of the main reflector without affecting the upper ornament and without creating any interference between different components. Because of the gap design between the light housing and the front cover, there is no need to open a hole for the alarm on the front cover, which will help lower the cost of production.

In other words, the *embodiment* relates to a type of motorcycle and its headlight structure, and more particularly to the headlight structure of the motorcycle that does not require the opening of an alarming hole, and a motorcycle to which such a headlight structure is mounted.

According to a preferred embodiment, a motorcycle is proposed including: a body; a seat mounted to the upper part of the rear of the body; a gear case mounted to the lower part of the rear of the body; a rear wheel, a front wheel; a headlight structure of the motorcycle mounted above the front wheel and provided with a light holder, a light housing, a front cover, a back cover, and a main reflector, wherein the light housing can be combined directly to the back cover, and an upper ornament is further provided to form a different part from the main reflector, and the upper ornament is located above the main reflector and extends backwards along the shape of the light housing.

Therein, said the back cover is mounted to the lower part of the rear of the light housing and/or said main reflector has a first reflection surface and a second reflection surface.

Preferably, a gap is formed naturally at the joint section between the front cover and the front part of the light housing to provide the alarming sound.

A headlight structure for a motorcycle may comprise a light holder; a light housing, the rear part of which is connected directly to the holder; a front cover, between which and the front part of the light housing a gap is formed naturally to provide the alarming sound; and a main reflector mounted to the light holder and provided with a bowl-shaped first reflection surface including a first opening designed to mount a main light bulb.

Therein, said main reflector is further provided with a second reflection surface that is an L-shaped at the end and has a second opening to mount a position bulb.

The headlight structure of the motorcycle further comprises an upper ornament forming a different part from the main reflector, located above the main reflector, and extending backwards along the shape of the light housing.

Therein, the back of the main reflector is connected to a rotating structure so that the main reflector can rotate around the rotation axis of the structure and adjust its angle of depression or elevation.

Said rotating structure includes at least two round-head screws on the same height.

The back of the main reflector is connected to an elastic structure, the mounting height of which is different from that of the rotating structure. The stretching and withdrawing of the elastic structure sets the angle of depression or elevation of the main reflector.

Therein, said elastic structure includes at least one screw. Moreover, the rear of the light housing is connected to the light holder. Additionally, both sides of the light holder include two fastening ears to fasten the front cover.

According to a further embodiment, the motorcycle comprises a body; a seat mounted to the upper part of the rear of the body; a gear case mounted to the lower part of the rear of the body; a rear wheel; a front wheel; and a headlight structure mounted to the part of the body that is above the front wheel as described before.

Therein, said headlight structure of the motorcycle further includes another upper ornament forming a different part from the main reflector, located above the main reflector, and extending backwards along the shape of the light housing, and said main reflector of the headlight structure of the motorcycle further includes a second reflection surface that is an L-shaped at the end and has a second opening to mount a position bulb.

Moreover, said the headlight structure of the motorcycle further includes at least two round-head screws that are on the same height and are mounted to the back of the main reflector of the headlight structure of the motorcycle so that the main reflector can adjust its angle of depression or elevation about the line between the two round-head screws serving as the rotation axis. Also, the headlight structure of the motorcycle further includes at least one screw, the mounting height of which is different from that of the round-head screws, and the stretching and withdrawing of the screw sets the angles of depression or elevation of the main reflector.

## Claims

1. Headlight structure for a motorcycle comprising a light holder (33), a main reflector (34,341,342) mounted to the light holder (33), a light housing (32) connected to the light holder (33) and/or a back cover (41), and a front cover (31) located next to the light housing (32), **characterised in that** a sound opening (38) for the provision of an alarm sound is provided between a front part of said light housing (32) and said front cover (31).

2. Headlight structure for a motorcycle, according to claim 1, **characterized by** an upper ornament (36), wherein the upper ornament (36) is provided inside the light housing (32) as a part separate from the main reflector (34,341,342), and wherein the upper ornament (36) is located above the main reflector and extends backwards along the shape of the light housing (32).

3. Headlight structure according to claim 1 or 2, **characterized in that** the main reflector (34,341,342) is provided with a bowl-shaped first reflection surface (341) including a first opening designed to mount a main light bulb (35).

4. Headlight structure according to at least one of the claims 1 to 3, **characterized in that** said main reflector (34,341,342) is further provided with a second reflection surface (342) that is L-shaped and has a second opening to mount a position bulb (37).

5. Headlight structure according to at least one of the claims 1 to 4, **characterized in that** a back part of the main reflector (34,341,342) is connected to a rotating structure (54) so that the main reflector (34,341,342) is rotatable about a rotation axis thereof and an angle of depression or elevation is adjustable.

6. Headlight structure according to claim 5, **characterized in that** said rotating structure (54) includes at least two round-head screws (51) positioned on the same height and/or **in that** the back part of the main reflector (34,341,342) is connected to a variable structure (64), the mounting height of which is different from that of the rotating structure (54), wherein said variable structure (64) preferably includes at least one screw (61).

7. Headlight structure according to at least one of the claims 1 to 6, **characterized in that** a rear part of the light housing (32) is connected to the light holder (33) and /or the back cover (41).

8. Headlight structure according to at least one of the claims 1 to 7, **characterized in that** both sides of the light holder (33) include at least one, preferably two, fastening ears (73) to fasten a front cover (31).

9. Headlight structure according to at least one of the claims 1 to 8, **characterized in that** the back cover (41) is mounted to a lower part of the rear part of the light housing (32).

10. Motorcycle comprising a body (81), a seat (82) mounted to an upper part of the rear of the body (81), a gear case (83) mounted to a lower part of the rear of the body (81), a rear wheel (85), a front wheel (84), and a headlight structure (30) mounted to the part of the body that is above the front wheel (84), **characterized in that** said headlight structure (30) is configured according to at least one of the claims 1 to 9.

## Patentansprüche

1. Scheinwerferaufbau für ein Motorrad, der aufweist einen Lampenhalter (33), eine Hauptreflektor (34, 341, 342), montiert an dem Lampenhalter (33), ein Lampengehäuse (32), verbunden mit dem Lampenhalter (33) und / oder einer hinteren Abdeckung (41), und einer vorderen Abdeckung (31), nahe zu dem Lampengehäuse (32) angeordnet, **dadurch gekennzeichnet, dass** eine Geräuschöffnung (38) für das vorsehen eines Alarmgeräuschs zwischen einem vorderen Teil des Lampengehäuses (32) und der vorderen Abdeckung (31) vorgesehen ist.

2. Scheinwerferaufbau für ein Motorrad nach Anspruch 1, **gekennzeichnet durch** ein oberes Ornament (36), wobei das obere Ornament (36) innerhalb des Lampengehäuses (32) als ein von dem Hauptreflektor (34, 341, 342) separates Teil vorgesehen ist, und wobei das obere Ornament (36) oberhalb des Hauptreflektors angeordnet ist und sich nach hinten entlang der Form des Lampengehäuses (32) erstreckt.

3. Scheinwerferaufbau für ein Motorrad nach Anspruch 1 oder 2, **dadurch gekennzeichnet, dass** der Hauptreflektor (34, 341, 342) mit einer schüsselförmigen ersten Reflexionsoberfläche (341) versehen ist, die eine erste Öffnung enthält, ausgelegt um eine Hauptglühlampe (35) zu montieren.

4. Scheinwerferaufbau nach zumindest einem der Ansprüche 1 bis 3, **dadurch gekennzeichnet, dass** der Hauptreflektor (34, 341, 342) außerdem mit einer zweiten Reflexionsoberfläche (342) versehen ist, die L- förmig ist und eine zweite Öffnung hat, um eine Positionsglühlampe (37) zu montieren.

5. Scheinwerferaufbau nach zumindest einem der Ansprüche 1 bis 4, **dadurch gekennzeichnet, dass** ein hinterer Teil des Hauptreflektors (34, 341, 342) mit einem Drehaufbau (54) verbunden ist, so dass der Hauptreflektor (34, 341, 342) um seine Drehachse drehbar ist und ein Winkel des Niederdrückens oder Anhebens einstellbar ist.

6. Scheinwerferaufbau nach Anspruch 5, **dadurch gekennzeichnet, dass** der Drehaufbau (54) zumindest zwei Rundkopfschrauben (51) enthält, positioniert auf derselben Höhe und /oder **dadurch**, dass der hintere Teil des Hauptreflektors (34, 341, 342) mit einem veränderbaren Aufbau (64) verbunden ist, wobei dessen Montagehöhe von der des Drehaufbaus (54) verschieden ist, wobei der veränderbare Aufbau vorzugsweise zumindest eine Schraube (61) enthält.

7. Scheinwerferaufbau nach zumindest einem der Ansprüche 1 bis 6, **dadurch gekennzeichnet, dass** ein hinterer Teil des Lampengehäuses (32) mit dem Lampenhalter (33) und / oder der hinteren Abdeckung (41) verbunden ist.

8. Scheinwerferaufbau nach zumindest einem der Ansprüche 1 bis 7, **dadurch gekennzeichnet, dass** beide Seiten des Lampenhalters (33) zumindest eine, vorzugsweise zwei Befestigungsösen (73) zum Befestigen einer vorderen Abdeckung (31) enthalten.

9. Scheinwerferaufbau nach zumindest einem der Ansprüche 1 bis 8, **dadurch gekennzeichnet, dass** die hintere Abdeckung (41) an einem unteren Teil des hinteren Teils des Lampengehäuses (32) montiert ist.

10. Motorrad, aufweisend eine Karosserie (81), einen Sitz (82), montiert an einem oberen Teil der Rückseite der Karosserie (81), ein Getriebegehäuse (83), montiert an einem unteren Teil der Rückseite der Karosserie (81), ein Hinterrad (85), ein Vorderrad (84) und einen Scheinwerferaufbau (30), montiert an dem Teil der Karosserie, der oberhalb des Vorderrades (84) ist, **dadurch gekennzeichnet, dass** der Scheinwerferaufbau (30) entsprechend zumindest einem der Ansprüche 1 bis 9 konfiguriert ist.

## Revendications

1. Structure de phare pour une motocyclette comprenant un support de phare (33), un réflecteur principal (34, 341, 342) fixé au support de phare (33), un boîtier de phare (32) raccordé au support de phare (33) et/ou à un capuchon arrière (41), et un capuchon avant (31) situé à côté du boîtier de phare (32), **caractérisée en ce qu'**une ouverture sonore (38) pour la production d'un son d'alarme est prévue entre une partie avant dudit boîtier de phare (32) et ledit capuchon avant (31).

2. Structure de phare pour une motocyclette selon la revendication 1, **caractérisée par** un ornement supérieur (36), dans laquelle l'ornement supérieur (36) est prévu à l'intérieur du boîtier de phare (32) en tant que pièce séparée du réflecteur principal (34, 341, 342), et dans laquelle l'ornement supérieur (36) est situé au-dessus du réflecteur principal et s'étend vers l'arrière le long de la forme du boîtier de phare (32).

3. Structure de phare selon la revendication 1 ou 2, **caractérisée en ce que** le réflecteur principal (34, 341, 342) est doté d'une première surface de réflexion (341) en forme de cuvette comprenant une première ouverture destinée au montage d'une lampe de phare principal (35).

4. Structure de phare selon au moins l'une des revendications 1 à 3, **caractérisée en ce que** le réflecteur principal (34, 341, 342) est également doté d'une seconde surface de réflexion (342) en L qui présente une seconde ouverture destinée au montage d'une lampe de feu de position (37).

5. Structure de phare selon au moins l'une des revendications 1 à 4, **caractérisée en ce qu'**une partie arrière du réflecteur principal (34, 341, 342) est raccordée à une structure rotative (54) de sorte que le réflecteur principal (34, 341, 342) peut tourner autour d'un axe de rotation de celle-ci et qu'un angle d'abaissement ou d'élévation est ajustable.

6. Structure de phare selon la revendication 5, **caractérisée en ce que** ladite structure rotative (54) comprend au moins deux vis à tête ronde (51) positionnées à la même hauteur et/ou **en ce que** la partie arrière du réflecteur principal (34, 341, 342) est raccordée à une structure variable (64), dont la hauteur de montage est différente de celle de la structure rotative (54), dans laquelle ladite structure variable (64) comprend de préférence au moins une vis (61).

7. Structure de phare selon au moins l'une des revendications 1 à 6, **caractérisée en ce qu'**une partie arrière du boîtier de phare (32) est raccordée au support de phare (33) et/ou au capuchon arrière (41).

8. Structure de phare selon au moins l'une des revendications 1 à 7, **caractérisée en ce que** les deux côtés du support de phare (33) comprennent au moins une, de préférence deux, pattes de fixation (73) pour fixer un capuchon avant (31).

9. Structure de phare selon au moins l'une des revendications 1 à 8, **caractérisée en ce que** le capuchon arrière (41) est fixé à une partie inférieure de la partie arrière du boîtier de phare (32).

10. Motocyclette comprenant un châssis (81), un siège (82) monté sur une partie supérieure de l'arrière du châssis (81), un carter d'engrenage (83) monté sur une partie inférieure de l'arrière du châssis (81), une roue arrière (85), une roue avant (84) et une structure de phare (30) montée sur la partie du châssis qui est au-dessus de la roue avant (84), **caractérisée en ce que** ladite structure de phare (30) est configurée selon au moins l'une des revendications 1 à 9.
